# EUROPEAN PATENT SPECIFICATION

(11) **EP 0 950 323 B1**
(45) Date of publication and mention of the grant of the patent: **02.03.2005**
(21) Application number: 97947741.1
(22) Date of filing: 16.12.1997
(51) Int. Cl.: H04Q 3/00

(54) **METHOD FOR CONTROLLING A CALL**
STEUERUNGSVERFAHREN EINES ANRUFES
PROCEDE DE GESTION D'UN APPEL

(30) Priority: 19.12.1996 FI 965133
(43) Date of publication of application: 20.10.1999
(73) Proprietor: Nokia Corporation, 02150 Espoo (FI)
(72) Inventor: MELAMETSÄ, Kyösti, FIN-02630 Espoo (FI)
(74) Representative: Ruuskanen, Juha-Pekka
(86) International application number: PCT/FI1997/000792
(87) International publication number: WO 1998/027750

(56) References cited:
- EP-A- 0 708 570
- EP-A- 0 710 042
- WO-A-97/33441
- US-A- 5 598 464
- US-A- 5 625 681

## Description

### Field of the invention

This invention generally concerns controlling of a call, especially in a network where subscribers have ported to the concerned network from the network of another operator.

### Background of the invention

Along with liberalised telelegislation, several countries have seen the arrival of new teleoperators, who begin competing for customers with the old operators. For some of these new operators a certain geographically limited area has been determined in which they may operate. In other words, some new operators are local operators. It is easier for all new operators to obtain customers, if the subscriber can port from the old operator's network to a new operator's network in such a way that the subscriber's telephone number remains the same.

Such "operator portability" was carried out earlier either through call forwarding or by number translation. The former alternative means that the subscriber exchange of the old network automatically routes calls coming to the subscriber number to the number corresponding to the subscriber's new location. The latter alternative again means that a number translation of the called number is done in the old operator's exchange, whereby the number is given a new prefix identifying that (new) exchange to which the subscriber is connected (in the new operator's network). It is also possible to give an entirely new number, as is mentioned hereinafter.

Although both said methods are possible, number translation has been regarded as the better alternative. This is because number conversion allows better "portability" of services from one network to another. The calling line identity (CLI) in particular will pass more easily through the network when number translation is used.

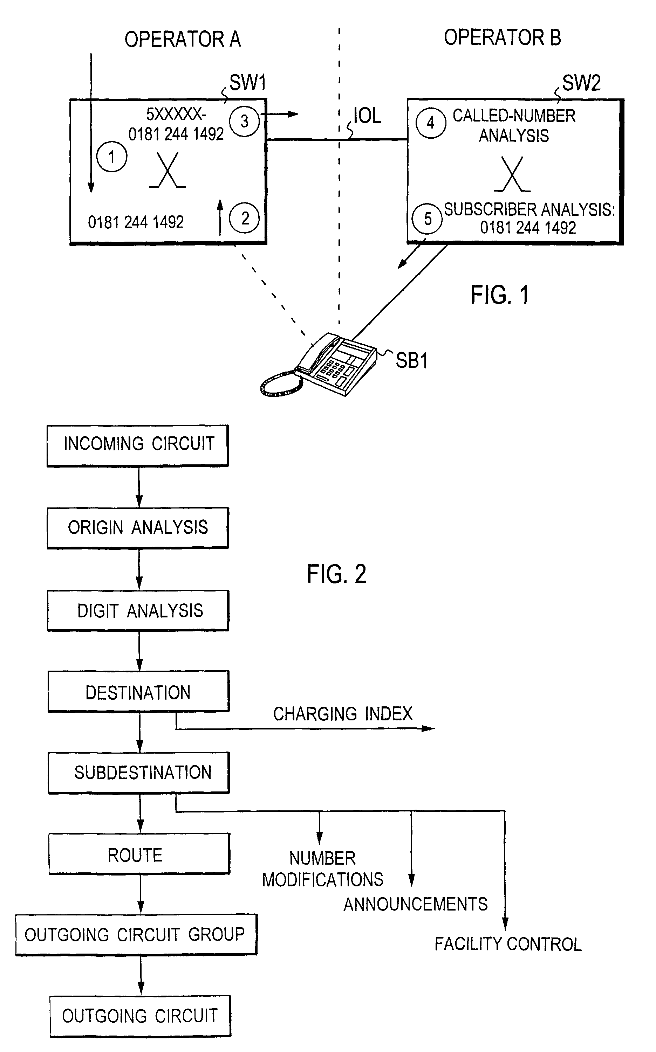

Figure 1 illustrates progress in the number translation method when subscriber SB1 (whose telephone number is 0181 244 1492), who was formerly in the network of operator A, has ported to the network of operator B. Various steps in the method are marked with circled numbers 1...5. A call coming to the said subscriber from the network of operator A will first come to the subscriber's former terminal exchange SW1 (step 1). In this exchange a complete digit analysis is made of the called number, as a result of which a prefix is added before the number to inform that the subscriber in question has been ported to another operator's network. The prefix, the length of which may vary from one system to another, may be e.g. in the form YXXXXX, wherein Y means the subscriber ported to operator B's network while XXXXX states the address of the subscriber's new terminal exchange (SW2) in operator B's network (step 2). The call is rerouted with the aid of this new number (YXXXXX-0181 244 1492). As a result of this routing, data of the call attempt is transmitted to an interoperator link IOL (step 3). In the subscriber's new terminal exchange SW2 a digit analysis of the received number is first performed beginning from the prefix YXXXXX, whereby it is detected that the call ends in exchange SW2 (step 4). Prefix YXXXXX is then dropped and a digit analysis of the actual number is performed using the analysis trees of the exchange's own subscribers (step 5), in consequence of which the correct subscriber line is found.

For those subscribers who have been ported from another operator's network to the own network, it would be desirable that calls initiated from the own network need no more be routed via the old operator's network, because such routing back and forth unnecessarily requires resources also from the old operator's network. The old operator will charge the new operator for the use of these resources, so undesirable extra costs are caused in this way for the call. In some countries the authorities have laid down conditions which the network must meet in such cases. For example, it is a condition in Great Britain that it must be possible to route only in the own network all those calls where the calling subscriber and a subscriber ported from another operator are in the area of the same exchange.

When using the number translation method, a digit analysis must be done in the network's exchange on the whole called number (until the last digit) so that those subscribers can be detected who have been ported from another operator to the own network. When as good characteristics as possible are desired for the entire network in the sense described above (calls ending in the own network are not routed via the network of the called subscriber's old operator), the number of records used for digit analyses will grow in the exchange, whereby the exchange will also need enormously more memory. A possible direct solution to the problem could be by increasing the memory, but in the long term this is not a feasible solution.

A feature logically similar to "operator portability" is number portability, which means that the subscriber's terminal equipment (e.g. a telephone) may be ported in the same network to a geographically other area (to an area of another exchange) keeping the number of the terminal equipment unchanged. US patent 4,754,479 describes a method of implementing number portability. In the area of a cluster formed by several exchanges the solution described in the publication uses a common database, which is decentralized to all exchanges belonging to the cluster. A subscriber can be ported within the cluster to another exchange when such a change is made in the database of all exchanges which indicates the new connection between the terminal equipment number and that exchange to which the subscriber's terminal equipment (telephone) has been ported.

In principle, it would be possible to use this solution also for detecting subscribers ported from another operator, but the solution suffers from the same drawbacks as the number translation method described above, since in each exchange there must be data on all ported numbers. To avoid the problems described above, one might try decentralizing the solution according to the US patent so that a certain exchange will have data on a part of ported numbers only. In this case, however, extra logic must be generated in the network always to route calls through the correct exchange. At the same time, undesirable extra speech paths would be brought about in the network.

European Patent Application EP 0 710 042 relates to a method for providing local telephone number portability. The method of EP 0 710 042 implements two tiers of databases: local databases dedicated to local switches first queried for call connection information matching the dialled number and a centralized database serving all switches which is subsequently queried if local database response is not sufficient for call placement. In the local database, frequently queried numbers are stored. Less frequently queried numbers are purged from the local database when a new number is added therein.

### Summary of the invention

The purpose of the invention is to eliminate the drawbacks described above and to bring about a method allowing efficient avoidance of both unnecessary traffic between operators and expansion of data structures in exchanges with the resulting drawbacks.

This objective is achieved with the solution defined in the first independent claim.

The idea of the invention is to utilize intelligent network by generating such a database centralized in the intelligent network, wherein those subscriber numbers are stored whose corresponding subscribers have been ported to the own network from another operator. When the call attempt's data meets predetermined conditions (that is, when the called number is, for example, in a certain number space), a query is made to the database whether the subscriber is one who has been ported to the operator's own network. The query results either in new routing data or in data indicating that routing of the call can be continued based on existing routing data.

By using the method according to the invention it is possible to conclude from all calls initiated from the new operator's network whether they will end up with a subscriber ported to the new operator's network, so it is possible also to avoid such traffic between the networks of the old operator and the new operator which will cause costs. By analysing a certain limited number of digits the exchange is able to decide whether a query need be made to the database. In practice, the number of these digits is very limited, because they are limited to that number space where the other operator has subscribers in the operating area of the operator owning the network. If the subscriber has been ported from another operator to the own network, it is also possible after the reply received from the database to limit the digit analysis to a very limited number of digits, for example, to a prefix received from the database or to its part.

The invention also achieves the benefit that maintenance of data related to the facility in question becomes considerably easier, because data need not be copied for databases located in several different places.

Another extra benefit is that when introducing new subscribers to the network from another operator's network, changes in analysis trees essential to the basic functions of the exchange will be needed considerably less frequently than before. This is essential, because faults made in changes to analysis trees may affect the routing functions of the exchange and this way probably the operation of the entire network. When using the solution according to the invention changes need be made to analysis trees only when the first subscriber per a certain number space is brought to the network. Other changes concern the centralized database, whereby any errors made in a change situation will only affect the concerned subscriber's calls.

### List of figures

In the following the invention and its advantageous embodiments are described in greater detail referring to Figures 2-6 in examples according to the appended drawings, wherein
- Figure 1: illustrates implementation of the known number translation method;
- Figure 2: illustrates routing functions to be performed in an exchange;
- Figure 3: illustrates routing as part of call processing;
- Figure 4: shows a conventional data structure used for digit analyses;
- Figure 5: shows a basic call state model associated with the calling party; and
- Figure 6: illustrates implementation at network level of the method according to the invention.

### Detailed description of the invention

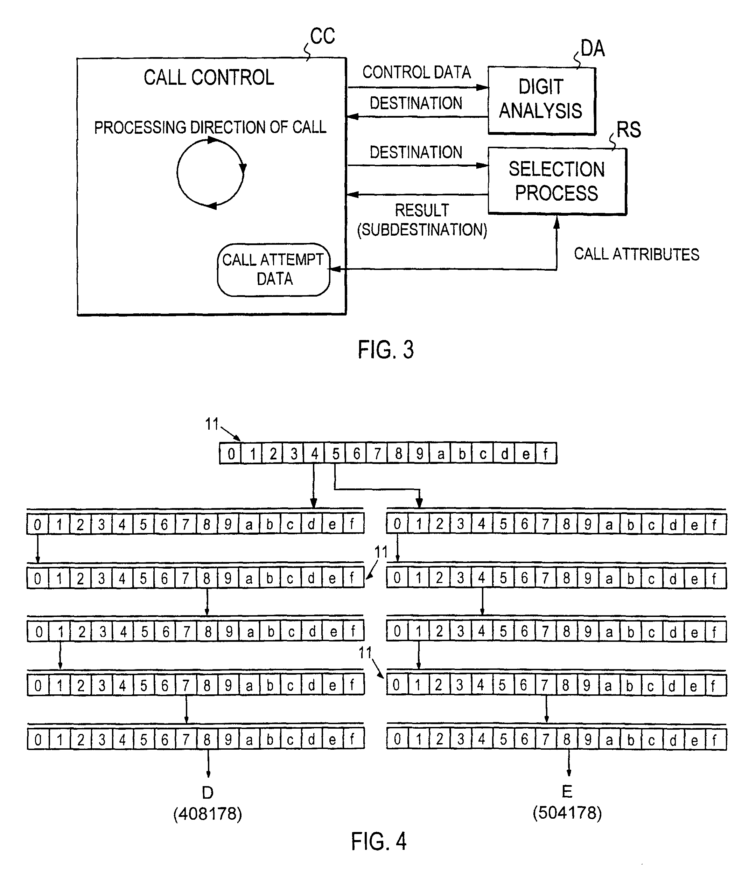

As a background to the solution according to the invention and to the above description of the known technology an illustration is first given of routing functions to be performed in a telephone exchange (Figures 2 and 3) and of the related digit analysis (Figure 4).

The routing principle is hierarchial according to Figure 2 in such a manner that origin and digit analyses are carried out at the beginning on the basis of information on the calling subscriber and the selected digits. The origin analysis is carried out to find out the information relating to the origin of the call. The information concerning the subscriber may be e.g. the origin of the incoming circuit group (or circuit) and the subscriber class of the calling subscriber. Thus the same selected digit series received from different incoming circuit groups or from subscribers belonging to different classes may lead to a different result. The destination is obtained as a result of the analyses conducted. For example, there may be 65,000 destinations in the Applicant's DX 200 exchange, each of which may contain 5 subdestinations. Subdestinations are typically divided into three main classes: connections directed to another exchange, subscriber lines in the same exchange and service triggers that initiate some service. A service of this kind may be, for example, the number translation described above, a voice announcement delivered to the subscriber or a more complicated service that requires a negotiation with a more remotely situated database (such as the service control point SCP in an intelligent network).

The destination also includes a so-called charging index which is supplied to the charging analysis (not shown in the figure).

One destination typically contains information on several, e.g. five different subdestinations. The subdestinations can be arranged within the destination into a given priority order in such a manner that one of them is the main alternative for routing. If e.g. a congestion is detected on the first subdestination, the call can be ported to some other subdestination.

Each subdestination is further connected to one outgoing or internal route. The circuit groups associated with the desired route are then tested in a given order to find an idle circuit. In this context a circuit refers to a combination of two transmission channels which enables a bidirectional transmission of signals between subscribers. A circuit group in turn refers to a set of circuits with a similar purpose of use.

When a call arrives at an exchange, the exchange typically generates a copy of the call control program and allocates it to said call. The call control program for its part calls routing functions. The call control program attends to the call until it is terminated, whereupon the copy is deleted.

Figure 3 illustrates these functions and in what way digit analysis and subdestination search (e.g. number translation) are part of the processing of a call. A call control block CC supplies control information (containing e.g. the selected number and information indicating with which analysis tree the digit analysis is to be carried out) to a digit analysis block DA that returns to the call control block information on the destination corresponding to the selected number. The destination refers in this context to a set of traffic control alternatives (i.e. subdestinations) that have been found on the basis of the digit analysis and other information, such as the subscriber class and the incoming circuit group. The call control block will forward these alternatives to the route selector RS that carries out an analysis of its own and returns the result to the call control block CC. This result is the subdestination mentioned above. The selection process employs data associated with the call attempt which data is known to the call control block CC.

In the manner described above, e.g. number translation is arrived at based on the call attempt's data.

The digit analysis to be performed in connection with routing is based in the telephone exchange (e.g. in Applicant's DX 200 exchange) on a data structure wherein records form a hierarchial tree structure. Each record contains e.g. 16 fields, one of which corresponds to a certain key (0, 1, 2,...9, *, #, etc.) of the telephone. The individual field is either empty (that is, it is not in use and thus contains nothing) or it contains a pointer. The pointer (some binary number in practice) may point either to the following record or to an object which is the result of the digit analysis. In practice an empty field means that no digit analysis is performed for the corresponding telephone key.

Figure 4 illustrates the principle described above. The data structure is formed by several records 11, each of which has 16 fields, which are marked with reference marks 0...9, a...f. An analysis to be performed e.g. for telephone number 408178 will return object D and an analysis performed for telephone number 504178 will return object E. The analysis is done by proceeding in the tree structure one chosen digit at a time by examining the contents of the field corresponding to the chosen digit and by proceeding to the record indicated by the pointer in said field, where the contents of the field corresponding to the following digit are examined, etc. The field corresponding to the digit which is examined last will give the result (destination) of the analysis, which is supplied to the route selector block RS.

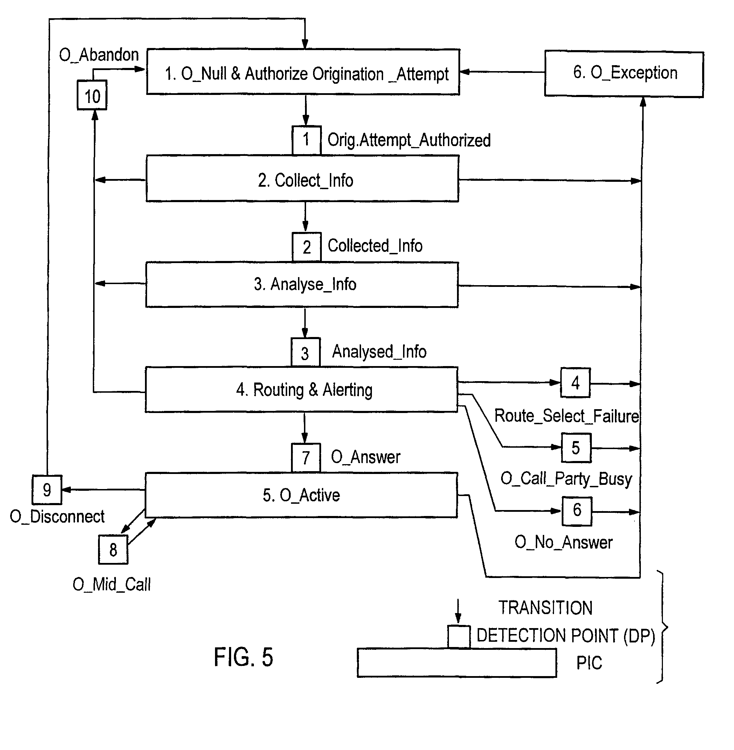

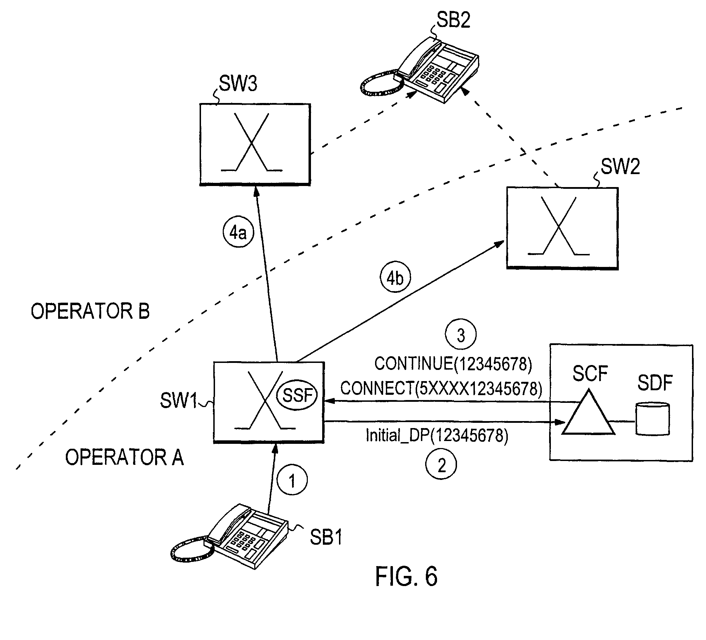

The foregoing is a brief description of those basic exchange functions which are also utilized by the present invention. In the following the progress of a call controlled in accordance with the invention will be described in greater detail referring to Figure 5, which shows an Originating Basic Call State Model O_BCSM associated with the calling party's call, and to Figure 6, which shows the progress of a call attempt at network level. In this context, terms and abbreviations relating to the intelligent network are assumed to be known, so the intelligent network will not be described in greater detail. The interested reader may get a better idea of the intelligent network e.g. from ITU-T's recommendations Q.121X or from Bellcore's AIN recommendation. A brief summary of the intelligent network can also be found in international patent applications PCT/FI97/00500...PCT/FI97/00506 (the same description in all). It can also be mentioned that in this context intelligent network does not only mean a network working exactly according to a certain standard, but the idea according to the invention may be used in any network architecture providing advanced services and containing a centralized database to which queries may be made by way of a signalling network.

According to the invention, in a centralized database of the intelligent network routing data are maintained on those subscribers who keeping their terminal equipment numbers have ported from another operator's network to the network in question. Since such a function is already defined in intelligent network standards, that is Service Data Function SDF, it is advantageous to maintain the mentioned data e.g. in SDP. SDP is a database containing the Service Data Function SDF and customer and network data. The Service Control Point SCP uses SDP services directly via a signalling or data network.

The database may contain e.g. a table containing the subscriber's number and a corresponding prefix identifying the subscriber's new terminal exchange. Instead of the prefix also that number may be used which in the numbering plan used corresponds to the subscriber's new location. The prefix is used as an example in the following.

The parts of the call state model shown in Figure 5 are Points in Call PIC, Detection Points DP, transitions and events. The PICs identify the functions of the call control function CCF that are required to complete one or more calls/connection states. The DPs indicate the points in the calling and connection procedure at which the control can be passed to the intelligent network. (The figure shows each detection point denoted with a name; in the ETSI (European Telecommunications Standards Institute) standards, the names pertain to the actual detection points, whereas in the ITU-T standards they pertain to the messages that the service switching function SSF sends to the SCP from that detection point). The transitions indicate the normal flow of the call/connection process from one PIC to another. The events cause transitions into the PIC and out of the PIC. No full description is given here, but reference is made to recommendation Q.1214 where anyone interested in the matter can find a more detailed description.

The entry event of PIC 1 (O_Null & Authorize_ Origination_Attempt) is a disconnection of the previous call (DP 9 or DP 10). The function in PIC 1 is setting of the line in an idle state and checking of the calling party's rights (check of the calling party's right to make the call having given characteristics). After (the calling subscriber's) rights have been verified, initial information is collected in PIC 2 from the calling party. This information is e.g. service codes and dialled digits.

Thereupon the call control moves on to PIC 3 where the obtained information is analysed to determine the routing address and call type. Should it be found at this stage that the called number is in a predetermined number area (that area where other operators have numbers in the area of the own network), a query is triggered in DP 3 to the intelligent network and processing of the call attempt is "freezed". The triggering condition is set up in the exchange in a manner known as such (e.g. using known MML commands).

The service switching function SSF hereby transmits the Initial_DP message (a message between SSF and SCF which is defined in the standards and which SSF generates on detecting a service request in any DP of the call model) to the service control function SCF. In the Initial_DP message at least the service identifier and the called number are transmitted to SCF, whereupon SCF will search the corresponding number from the database of ported subscribers SDP. Should the number not be found, SCF will transmit to SSF in reply a CONTINUE message according to standards, which means that SSF may continue, in a normal manner, the processing of the call attempt which was stopped earlier. If the number is found in the database, SCF will return to SSF a CONNECT message according to standards, with which a connection is established with the desired object or the call is rerouted to another object. SCF writes such a number in the CONNECT message which in the database corresponds to the number received by SCF from SSF.

If the return message is CONNECT, the processing of the call attempt returns to PIC 3, where a new digit analysis is done on the number received from SCP, whereafter the process proceeds to PIC 4. If the return message was CONTINUE, the processing of the call attempt will go on directly to PIC 4.

From this stage forward the call control proceeds in a known manner, whereby e.g. routing of the call is performed in PIC 4. Starting information is sent to the terminating basic call state model, and the call control is passed to the terminating half. The entry event of PIC 5 is constituted by an indication from the terminating basic call state model that the called party has answered the call. The function at PIC 5 consists of connection establishment between the calling and called parties and collection of charging data. Exit events include a service request obtained from the calling party (DP 8), information on the fact that either the calling party or the called party has disconnected the call (DP 9), or occurrence of an error situation (transfer to PIC 6, at which errors and exceptional situations are handled).

The above presentation is illustrated at network level in Figure 6. In the example shown in the figure, subscriber SB1 in the network of operator A dials subscriber SB2, whose telephone number is 12345678, which according to the used numbering plan corresponds to the area of operator B.

In the early part of the connection setup SSP exchange SW1 receives information about the A-subscriber's wish to make a call. This information may arrive e.g. as a Setup message according to standard Q.931 or the exchange may identify closing of the subscriber loop as a result of lifting of the handset by the subscriber. The information causes transfer to PIC 2 in the state model of a call according to Figure 5 and further to PIC 3 (step 1). If it is detected in PIC 3 that the called number is in a predetermined number range, a query to SCF will be triggered in DP 3 (step 2), otherwise entirely normal processing of the call attempt will continue. If the query was made, either a CONTINUE message or a CONNECT message is received as reply from SCF (step 3), depending on whether the subscriber is one who has been ported from operator B to operator A.

After the reply received from SCF, the call control proceeds in the known manner (described above) using as the called number either just the original number (step 4a) or e.g. the original number provided with a prefix (step 4b). It is essential for the analysis tree that if the subscriber has been ported to the network of operator A, only the prefix of the number or a part of it need be analysed.

When the terminating party's call model is initiated in PIC 4, the exchange of A-subscriber (SW1) will transmit an initial message to the exchange of the called subscriber through the signalling network. This initial message may be either an Initial Address Message IAM, if the common channel signalling system utilizes the ISDN User Part ISUP, or an Initial Address Message with Additional Information (IAI), if the Telephone User Part TUP is utilized. As a result of the initial message, the terminal exchange of the called subscriber starts processing the call attempt in a known manner according to the (terminating) basic call state model.

The longer the called number is analysed in the exchange of the calling subscriber, the greater the certainty that the subscriber corresponding to the number has been ported from another operator to the own network, whereby correspondingly less queries will be made to the database. Thus a suitable compromise must always be found between depth of analysis and size of analysis trees.

The idea according to the invention can be used also to implement portability of the number (geographically) by maintaining in a centralized database routing data on those subscribers of the own network who have been ported with their original numbers to areas of such exchanges which cover a number space to which the subscriber numbers do not belong. In this case a query is made to the database, if the called number belongs to the exchange's own number space.

SDP is presented above as an example of location of the centralized database according to the invention. However, it must be understood that the centralized database according to the invention may be located also in other physical entities of the intelligent network, e.g. in a service control point SCP, in an adjunct AD or in a service node SN, which along with SDP are those physical entities of the intelligent network where SDF may be located.

Although the invention was described above referring to examples shown in the appended drawings, it is obvious that the invention is not limited to these, but it may be changed within the framework of the inventive idea presented in the following claims. Although it is advantageous to make the decision on a query to the intelligent network depending on which is the called number, it is possible in a logical sense to make the decision based on any other information or set of information belonging to the data of the call attempt, provided that the terminal equipment can be identified unambiguously in this manner. It must also be noticed that although the database according to the invention is centralized, the service control function SCF transmitting requests to it may be decentralized.

## Claims

1. Method for controlling a call by using an intelligent network, the method comprising:
- maintaining a centralized database (SDF) in the intelligent network where routing data is stored on at least one of first subscribers, who have ported with their original terminal equipment numbers from a first telephone network to a second telephone network, and second subscribers, who have ported in the second telephone network with their original terminal equipment numbers to an area of an exchange covering a number range to which the terminal equipment number does not belong,
- processing a call attempt to a subscriber of a terminal equipment number in a service switch function (SSF) of the second telephone network in accordance with an originating basic call state model, and
- if routing data of the subscriber corresponding to the data of the call attempt is found in the centralized database, giving the routing data found in the centralized database as a reply and continuing the processing of the call attempt using said routing data, **characterized in that** the method further comprises:
- freezing the processing of the call attempt and making a query to the centralized database, when a predetermined part of the terminal equipment number of the subscriber belongs to a predetermined number range determining that the centralized database comprises information relating to at least one terminal equipment number of the at least one of the first and second subscribers belonging to the same predetermined number range.

2. Method as defined in claim 1, wherein, if routing data of the subscriber corresponding to data of the call attempt is not found in the database, routing of the call attempt is continued based on the routing data contained in the data of the call attempt.

3. Method as defined in claim 1, wherein, in connection with the query, the terminal equipment number of the called subscriber is transmitted to the database and at least a prefix is given in reply from the database, which prefix is to be added to the terminal number and identifies the exchange of the terminal equipment in the second telephone network.

## Patentansprüche

1. Verfahren zum Steuern eines Anrufs unter Verwendung eines intelligenten Netzwerks, wobei das Verfahren Schritte umfasst:
zum Unterhalten einer zentralisierten Datenbank (SDF) in dem intelligenten Netzwerk, wobei Verkehrslenkungsdaten bezüglich zumindest eines von ersten Teilnehmern, die mit zugehörigen ursprünglichen Endgerätevorrichtungsnummern von einem ersten Telefonnetzwerk zu einem zweiten Telefonnetzwerk portiert sind, und zweiten Teilnehmern, die in dem zweiten Telefonnetzwerk mit zugehörigen ursprünglichen Endgerätevorrichtungsnummern zu einem Bereich einer Vermittlungsstelle portiert sind, die einen Nummerbereich abdeckt, zu dem die Endgerätevorrichtungsnummer nicht gehört, gespeichert werden,
zum Verarbeiten eines Anrufversuchs zu einem Teilnehmer einer Endgerätevorrichtungsnummer in einer Dienstschaltfunktion (SSF) des zweiten Telefonnetzwerks entsprechend einem ursprünglichen Basisanrufzustandsmodells und,
wenn Verkehrslenkungsdaten des Teilnehmers, die den Daten des Anrufversuchs entsprechen, in der zentralisierten Datenbank gefunden werden, zum Angeben der in der zentralisierten Datenbank gefundenen Verkehrslenkungsdaten als eine Antwort und zum Fortsetzen der Verarbeitung des Anrufversuch unter Verwendung der Verkehrslenkungsdaten,
**dadurch gekennzeichnet, dass** das Verfahren Schritte umfasst
zum Einfrieren der Verarbeitung des Anrufversuchs und zum Stellen einer Anfrage an die zentralisierte Datenbank, wenn ein vorbestimmter Teil der Endgerätevorrichtungsnummer des Teilnehmers zu einem vorbestimmten Nummerbereich gehört, der bestimmt, dass die zentralisierte Datenbank Informationen umfasst, die zumindest eine Endgerätenummer des zumindest einen der ersten und zweiten Teilnehmer betreffen, die zu demselben vorbestimmten Nummernbereich gehört.

2. Verfahren nach Anspruch 1, wobei, wenn Verkehrslenkungsdaten des Teilnehmers, die Daten des Anrufversuchs entsprechen, in der Datenbank nicht gefunden werden, eine Verkehrslenkung des Anrufversuchs auf der Grundlage der Verkehrslenkungsdaten fortgesetzt wird, die in den Daten des Anrufsversuchs beinhaltet sind.

3. Verfahren nach Anspruch 1, wobei in Verbindung mit der Anfrage die Endgerätevorrichtungsnummer des angerufenen Teilnehmers zu der Datenbank übertragen wird und zumindest ein Präfix in einer Antwort von der Datenbank angegeben wird, wobei das Präfix an die Endgerätenummer anzufügen ist und die Vermittlungsstelle der Endgerätevorrichtung in dem zweiten Telefonnetzwerk identifiziert.

## Revendications

1. Procédé pour contrôler un appel en utilisant un réseau intelligent, le procédé comprenant :
- le maintien d'une base de données centralisée (SDF) dans le réseau intelligent où des données d'acheminement sont mémorisées concernant au moins l'un de premiers abonnés, qui sont passés avec leurs numéros d'équipements terminaux d'origine d'un premier réseau téléphonique dans un deuxième réseau téléphonique, et de deuxièmes abonnés, qui sont passés dans le deuxième réseau téléphonique avec leurs numéros d'équipements terminaux d'origine dans une zone d'un commutateur couvrant une gamme de numéros à laquelle le numéro d'équipement terminal n'appartient pas,
- le traitement d'une tentative d'appel vers un abonné d'un numéro d'équipement terminal dans une fonction de commutateur d'accès aux services (SSF) du deuxième réseau téléphonique selon un modèle d'état d'appel de base d'origine,
- si des données d'acheminement de l'abonné correspondant aux données de la tentative d'appel sont trouvées dans la base de données centralisée, la fourniture des données d'acheminement trouvées dans la base de données centralisée en tant que réponse et la poursuite du traitement de la tentative d'appel en utilisant lesdites données d'acheminement, **caractérisé en ce que** le procédé comprend en outre :
- le gel du traitement de la tentative d'appel et l'interrogation de la base de données centralisée, lorsqu'une partie prédéterminée du numéro d'équipement de terminal de l'abonné appartient à une gamme de numéros prédéterminée déterminant que la base de données centralisée comprend des informations concernant au moins un numéro d'équipement terminal dudit au moins l'un des premiers et deuxièmes abonnés appartenant à la même gamme de numéros prédéterminée.

2. Procédé selon la revendication 1, dans lequel, si des données d'acheminement de l'abonné correspondant à des données de la tentative d'appel ne sont pas trouvées dans la base de données, l'acheminement de la tentative d'appel est poursuivi sur la base des données d'acheminement contenues dans les données de la tentative d'appel.

3. Procédé selon la revendication 1, dans lequel, en relation avec l'interrogation, le numéro d'équipement terminal de l'abonné appelé est transmis à la base de données et au moins un préfixe est donné en réponse à partir de la base de données, lequel préfixe doit être ajouté au numéro de terminal et identifie le commutateur de l'équipement terminal dans le deuxième réseau téléphonique.
